# EUROPEAN PATENT SPECIFICATION

(11) **EP 4 548 745 B1**
(45) Date of publication and mention of the grant of the patent: **03.06.2026**
(21) Application number: 24207260.1
(22) Date of filing: 17.10.2024
(51) Int. Cl.: A01D 41/16, A01D 61/00, A01D 75/18

(54) **FEEDERHOUSE FOR A COMBINE HARVESTER**
EINZUGSGEHÄUSE FÜR EINEN MÄHDRESCHER
CHAMBRE D'ALIMENTATION POUR MOISSONNEUSE-BATTEUSE

(30) Priority: 06.11.2023 GB 202317040
(43) Date of publication of application: 07.05.2025
(73) Proprietor: Agco do Brasil Solucoes Agricolas LTDA, Sao Paulo, 14030-680 (BR)
(72) Inventor: Solimar Walter, Airton, Canoas (BR)
(74) Representative: AGCO Intellectual Property Department

(56) References cited:
- EP-A1- 3 569 052
- EP-A1- 4 238 405
- EP-A2- 3 771 325
- EP-B1- 1 145 619
- EP-B1- 3 072 382
- WO-A1-2021/023402
- GB-A- 2 171 881
- US-A1- 2018 007 832

## Description

### FIELD

Embodiments of the present disclosure relate generally to combine harvesters, and in particular to the feederhouse used to deliver crop material to the threshing system of the combine harvester.

### BACKGROUND

A combine harvester typically includes a crop cutting head (header) and a threshing system for detaching grains of cereal from the ears of cereal. A delivery system delivers the cut crop to the threshing system, known as the feederhouse. A separating apparatus is downstream of the threshing system, and a grain cleaning apparatus receives grain from the separating apparatus. A stratification pan aims to stratify the material into a layered structure of grain at the bottom and light chaff and other material other than grain (MOG) at the top.

The header is typically in the form of a wide array of cutters and a delivery auger (or belt) to feed the cut material to the central feederhouse. The feederhouse is typically in the form of a conveyor chain with cross bars that transport the crop material. The feederhouse supports the header, and typically also includes a control system for controlling a height, pitch and tilt of the header. A hydraulic drive is typically used to raise and lower the header, using hydraulic cylinders coupled between the chassis of the combine harvester and the feederhouse, and hydraulic actuators are used to control the pitch and tilt of the header relative to the main body of the feederhouse.

There are various designs for the threshing system and for the separating apparatus (e.g. axial or transverse) as well as for the grain cleaning apparatus. However, in all designs, there is a flow of material from the threshing system to the separating apparatus, and between the separating apparatus and the grain cleaning unit, in particular from the stratification pan to the grain cleaning unit. The threshing system typically comprises threshing rotors that rotate with respect to concave gratings (known simply as "concaves"). The threshing rotors may be arranged transversally or longitudinally with respect to the direction of travel of the combine harvester.

The header and feederhouse are some of the limiting performance factors of modern large combines. There is a trend to increase the size and weight of the header, and the maximum throughput of combines is also increasing. Machines with more capacity to process more material can be run faster, but this means the header height control system (called the Auto Header Height Control; AHHC) needs to react faster and hence it is also operated more frequently. The cycles of height control of the header generate several load cycles at the feederhouse structure.

One of the cycles that generates damage to the feederhouse structure is the vertical torsion load. This results, in particular, when the feederhouse is controlled to tilt the header. By way of example, in some cases there is a need for the feederhouse to tolerate a 50kN load at 1.5m distance from the center. An increasing header weight also contributes a greater vertical load.

These increasing loads can result in failure of the feederhouse structure. It is however difficult simply to increase the strength of the feederhouse because access is needed to the internal mechanism, so that the frame structure of the feederhouse needs removable panels. This complicates the aim of providing increased torsional and vertical load tolerance.

EP 1 145 619 B1 discloses a feederhouse according to the preamble of claim 1.

There is therefore a need for an improved feederhouse design.

### BRIEF SUMMARY

The invention is defined by the claims. According to the invention, there is provided a feederhouse for a combine harvester, comprising:
a drive belt;
a frame structure which encloses the drive belt, wherein the frame structure comprises:
   a tilt frame for connection to a header, wherein the tilt frame is rotatably adjustable about a longitudinal axis;
   a pitch frame connected to the tilt frame, wherein the pitch frame is rotatably adjustable about a lateral axis;
   a front housing section which connects to the pitch frame; and
   a rear housing section which has a pivotable connection for connection to a chassis of the combine harvester,
first and second lift actuators and first and second lift actuator pins, wherein the lift actuator pins each connect to the front housing section at opposite lateral sides and the lift actuators each connect to a lift actuator pin at one end and are for connection to the combine harvester chassis at the other end;
first and second pitch actuators and first and second pitch actuator pins, wherein the pitch actuator pins each connect to the front housing section at opposite lateral sides and the pitch actuators each connect to a pitch actuator pin at one end and connect to the pitch frame at the other end; and
first and second tilt actuators each connected between the tilt frame and the pitch frame, at opposite lateral sides,
wherein the feederhouse further comprises first and second reinforcement bars at opposite lateral sides, wherein each reinforcement bar connects to the lift actuator pin and pitch actuator pin at a first end and to the rear housing section at the opposite second end.

This feederhouse structure is able to tolerate increased vertical torsion load resulting from tilting actuation of the feederhouse and also increased vertical load resulting from an increase in header weight.

The feederhouse has a pair of links between (i) the actuator pins (i.e., the inner bushings) of the lift actuators (lift cylinders) and the actuator pins, i.e., inner bushings, of the pitch actuators (pitch cylinders)) and (ii) the rear housing where the main pivotal connection is made between the feederhouse and the combine harvester chassis. The reinforcement bars work either in traction or in compression depending on which way the header is tilting.

This structure gives an improved distribution of internal stresses and strains and thus enables increased torsional as well as vertical load to be tolerated by the feederhouse structure. The design depends more on the component designs and less on the manufacturing process especially welds which usually are the weak points for fatigue.

The feederhouse for example further comprises a first cross brace connected between the first end of the first reinforcement bar and the second end of the second reinforcement bar and a second cross brace connected between the second end of the first reinforcement bar and the first end of the second reinforcement bar.

These two cross braces together from an X brace to stabilize the two lateral sides.

The lift actuators, pitch actuators and tilt actuators preferably each comprise a hydraulic cylinder. They each have a bush at each end which connects around a respective pin, and the actuation sets the distance between the pins at each end.

The first and second reinforcement bars for example are at an underside of the feederhouse.

The front housing section and rear housing section for example comprise lateral metal casts and one or more cross bars connecting the lateral metal casts. The metals casts, cross bars, and the reinforcement bars between them provide the main structural integrity of the frame.

The feederhouse preferably further comprises paneling between the front and rear housing sections. However, since this paneling is no longer a main structural feature, the load bearing capacity is no longer dependent on the way the panels are connected, for example welds or bolts.

One or more panels are for example removable from the underside of the feederhouse. This gives access to the belt and other internal components of the feederhouse.

The invention also provides a combine harvester comprising:
a crop cutting head;
the feederhouse defined above;
a threshing system;
a separating system; and
a grain cleaning system for receiving the cut and threshed crop material.

### BRIEF DESCRIPTION OF THE DRAWINGS

One or more embodiments of the invention / disclosure will now be described, by way of example only, with reference to the accompanying drawings, in which:
Figure 1 shows a combine harvester (without a header);
Figure 2 shows the known combine harvester with one example of the internal mechanism shown;
Figure 3 shows in schematic from the basic elements of a known feederhouse 12.
Figure 4 shows an example of the framework and attached pitch frame of a known feederhouse.
Figure 5 shows the underside of the design of Figure 4 with added lines to show how loads are transmitted through the structure;
Figure 6 shows the modification to the feederhouse in accordance with the invention in schematic form;
Figure 7 shows the underside of the feederhouse in more detail;
Figure 8 shows the top part of Figure 7 enlarged;
Figure 9 shows the bottom part of Figure 7 enlarged; and
Figure 10 shows another view of the feederhouse (with the actuators removed) showing the top of the feederhouse.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to the design of the feederhouse used to deliver cut crop material to the processing system of a combine harvester.

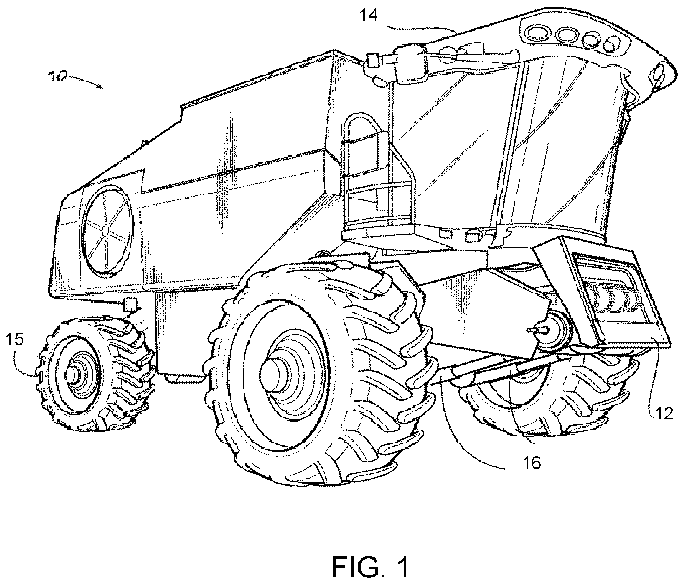

Figure 1 shows a combine harvester 10 without a header, and from front to back, comprises a feederhouse 12 and an operator cab 14 that is mounted to a chassis supported by wheels 15. In some embodiments, other or additional forms of travel may be used, such as tracks. Also shown are plural hydraulic cylinders 16 that are affixed in this example to the underside of the feederhouse 12 on one end and to the chassis on the other end in known manner. As is known, the feeder house 12 moves (e.g., up and down, tilt, etc.) based on actuation of the hydraulic cylinders 16, which causes a detachably coupled header to also be raised, lowered, and/or tilted.

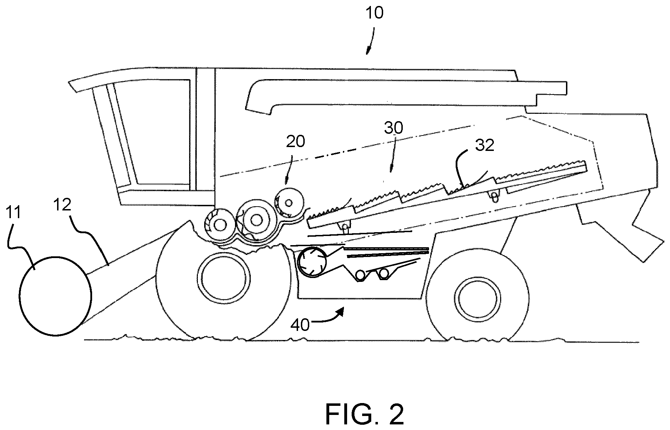

Figure 2 shows the known combine harvester 10 with one example of the internal mechanism shown. A header 11 functions as a crop cutting head and comprises a wide laterally extending transverse auger or belt, which cuts the crop material and drives it inwardly towards a central area. A front elevator housing receives the cut crop material and includes the feederhouse 12 for transporting the crop material.

The feederhouse delivers the crop material to a threshing system 20 for detaching grains of cereal from the ears of cereal, and a separating apparatus 30 which is connected downstream of the threshing system 20. The threshing system comprises one or more threshing units, in particular rotors, and associated concaves.

In the example shown, the separating apparatus 30 includes a plurality of parallel, longitudinally-aligned, straw walkers 32, and this is suitable for the case of a so-called straw-walker combine. The grains after separation by the separating device 30 pass to a grain cleaning apparatus 40.

In the example shown, the threshing system 20 is a tangential-flow 'conventional' threshing system, i.e., formed by rotating elements with an axis of rotation in the side-to-side direction of the combine harvester and for generating a tangential flow. For example, the 'conventional' threshing system includes a rotating, tangential-flow, threshing cylinder and a concave-shaped grate. The threshing cylinder includes rasp bars (not shown) which act upon the crop stream to thresh the grain or seeds from the remaining material, the majority of the threshed grain passing through the underlying grate and onto a stratification pan (also sometimes known as the grain pan).

There are also axial threshing systems, i.e., formed by rotating elements with an axis of rotation in the longitudinal direction (direction of travel). For example, the threshing section may have axially-aligned rasp bars spaced around the front section whilst the separating section has separating elements or fingers arranged in a pattern, e.g., a spiral pattern, extending from the rasp bars to the rear of the rotor.

This disclosure relates to the design of the feederhouse and header, and in particular relates to the design of the feederhouse to enable the structure to tolerate increased loads to enable a larger header and/or increased operating speeds to be tolerated.

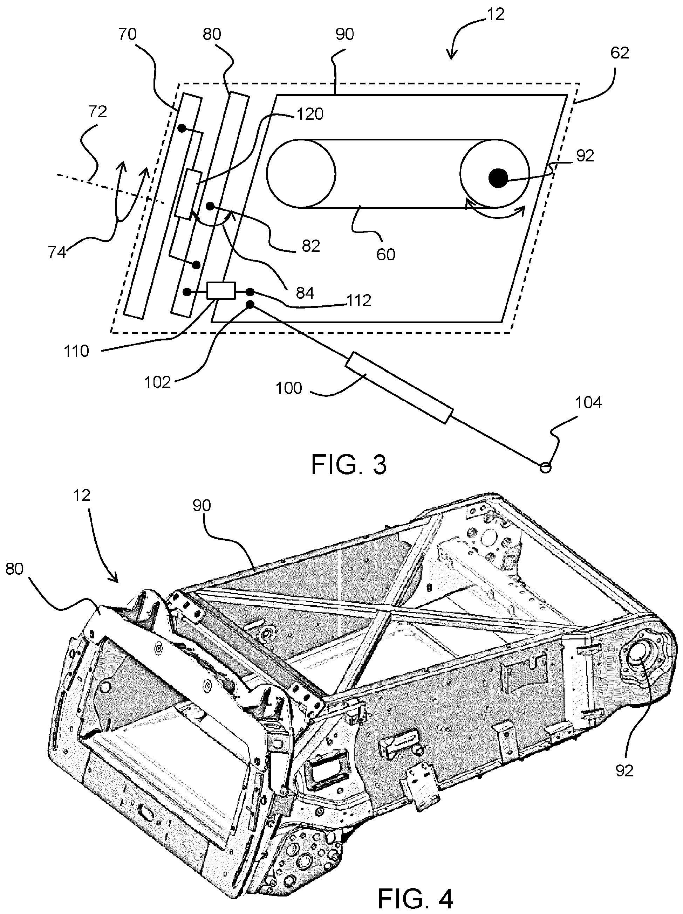

Figure 3 shows in schematic from the basic elements of a known feederhouse 12.

The feederhouse 12 comprises a drive belt 60 mounted within a frame structure 62. The frame structure 62 comprises a tilt frame 70 for connection to the header. The tilt frame is rotatably adjustable about a longitudinal axis 72 as shown by arrow 74. The longitudinal axis extends in the for-aft direction of the combine. For a horizontal longitudinal axis, the rotation would be in a vertical plane, but the tilt frame may in fact have a backward tilt so that the rotation is in a backward tilted plane. Tilting the tilt frame raises one side of the cutting head and lowers the other side so that the cutting head remains at a constant distance to the ground when there is a lateral ground slope.

A pitch frame 80 is mounted behind the tilt frame. The pitch frame is rotatably adjustable about a lateral axis 82, namely an axis extending horizontally across the lateral width direction of the combine, as shown by arrow 84. Adjusting the pitch frame tips the top of the cutting head forward or backward.

The pitch frame connects to the front of an enclosed framework 90, and the rear of the framework 90 has a pivotable connection 92 to a chassis of the combine harvester. This is the same rotation axis as the rotation axis of a rear roller of the belt 60.

There are actuators for controlling the various parts of the feederhouse. Figure 3 is a side view, and the actuators shown are all at one side of the feederhouse, but there are pairs of each type of actuator, with one of each pair at each side of the feederhouse.

Lift actuators 100 connect to the front of the framework. They extend between a lift actuator bush, around a lift actuator pin 102 at one end, and they connect to the combine harvester chassis at the other end, at bush 104.

Pitch actuators 110 connect to the front of the framework. They extend between a pitch actuator bush, around a pitch actuator pin 112 at one end and connect to the pitch frame at the other end (again using a pin and bush arrangement).

Tilt actuators 120 connect between the tilt frame and the pitch frame (again with a pin and bush arrangement at each end). The tilt actuators on opposite sides work in opposite directions to rotate the tilt frame 70.

A problem with this design is that the vertical load and vertical torsion can result in component fatigue, in particular the framework part.

Figure 4 shows an example of the framework 90 and attached pitch frame 80 of a known feederhouse (without showing the tilt frame).

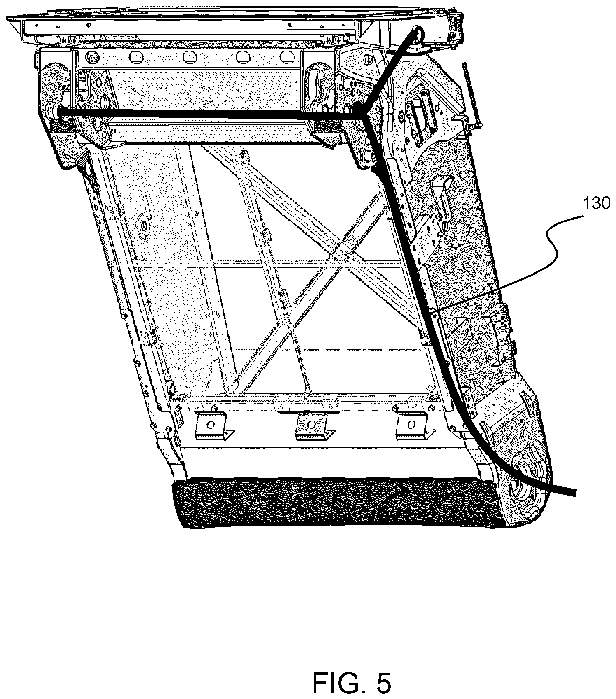

Figure 5 shows the underside of the design of Figure 4 with added lines 130 to show how loads are transmitted through the structure. Loads are concentrated at the edges of the framework where there are welds, rivets or bolts, and these joins can be prone to failure.

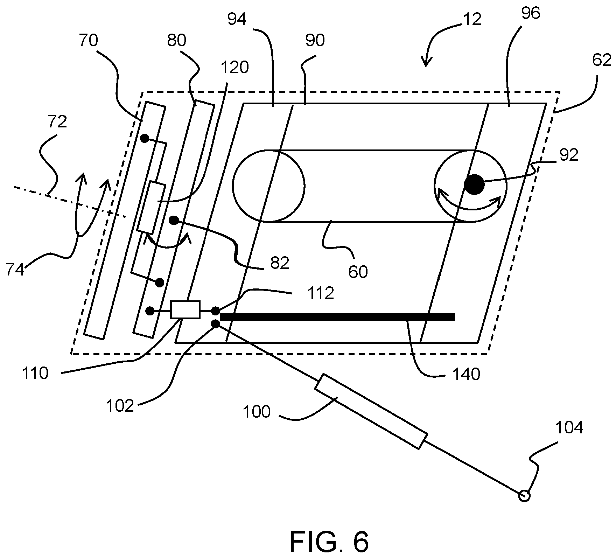

Figure 6 shows the modification in accordance with the invention in schematic form. It shows the same design as Figure 3 but with the modifications explained below.

The framework 90 is formed as a front housing section 94 which connects to the pitch frame (via the pitch actuator 110) and a rear housing section 96.

First and second reinforcement bars 140 are provided at opposite lateral sides (only one is seen in the side view of Figure 6). These reinforcement bars connect between the front and rear housing sections. In particular, they connect to the front housing section at the location of the lift actuator pin 102 (and bush) and pitch actuator pin 112 (and bush).

The reinforcement bars connect to the lift actuator pin and pitch actuator pin. By this is meant there is a rigid connection between the end of the reinforcement bar and the pins, for example via a connector piece.

It is noted that the pins 102, 112 may be separate support pins or they may the same pin, with a first region that supports the lift actuator (and this region of the shared pin may be considered to be the lift actuator pin) and a second region that supports the pitch actuator (and this region of the shared pin may be considered to be the pitch actuator pin).

The pins on each side of the structure could also extend right across the width, so that a single shared pin the pins at each lateral side. Thus, each pin as described above may be considered to comprise a pin portion, and these pin portions may be separate or they may be joined to form longer support pins.

This feederhouse structure is able to tolerate increased vertical torsion load resulting from tilting actuation of the feederhouse and also increased vertical load resulting from an increase in header weight. The reinforcement bars work either in traction or in compression depending on which way the header is tilting.

The structure gives an improved distribution of internal stresses and strains and thus enables increased torsional as well as vertical load to be tolerated. The design depends more completely on the component designs and less on the manufacturing process especially welds witch usually are the weak points for fatigue.

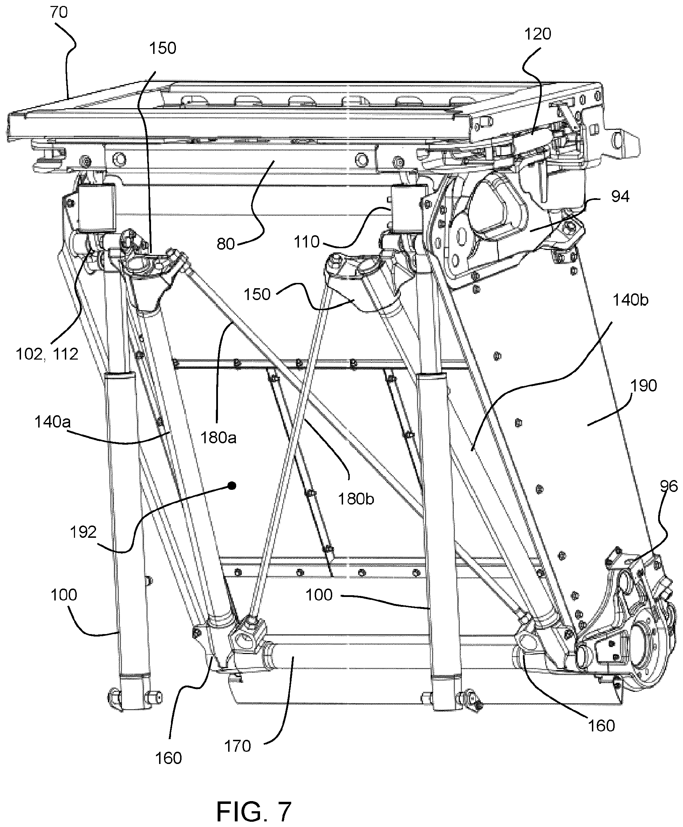

Figure 7 shows the underside of the feederhouse, with the connected pitch frame 80 and tilt frame 70.

The two reinforcement bars 140a, 140b are located at the underside of the feederhouse. There is a first reinforcement bar 140a and a second reinforcement bar 140b. A first end of each reinforcement bar connects to a cast front connector unit 150.

This front connector unit 150 connects a front end of the respective reinforcement bar to a respective one of the lift actuator pins 102 and to a respective one of the pitch actuator pins 112 (which may be separate or together form a single pin as explained above). The connector unit has an opening or openings for receiving the pins. Thus, the pins extend between the front housing section 94 and the connector unit. A rear end of each reinforcement bar is connected to a rear connector unit 160. The two rear connector units 160 are coupled together by a cross bar 170, and the rear connector units are formed as integral parts of the rear housing section 96. Thus, the rear housing section may be considered to comprise the cast side parts, the connector units 160 and the cross bar 170.

Figure 7 also shows that the front and rear connection units make a further connection to first and second cross braces 180a, 180b. A first cross brace 180a is connected between the first (front) end of the first reinforcement bar 140a and the second (rear) end of the second reinforcement bar 140b and a second cross brace 180b is connected between the second (rear) end of the first reinforcement bar 140a and the first (front) end of the second reinforcement bar 140b. These two cross braces together from an X brace to stabilize the two lateral sides.

The first and second reinforcement bars 140a, 140b have a required stiffness, which is achieved by providing a large diameter and wall thickness. This may be determined by structural analysis. The moment of inertia of this component is important, to support vertical torsion loads, and hence a small diameter bar for example will not be sufficient because of the side load. The bars are formed as seamless tubes to enable high wall thickness and to avoid weak points. By way of example, the reinforcement bars comprise tubes with a diameter between 70 mm and 80 mm.

The enclosure formed by the feederhouse comprises paneling (side panels 190 and top and bottom panels). Figure 7 shows removable bottom panels 192. This is made easier because the paneling is no longer a main structural feature.

Figure 7 shows the lift actuators 100, the pitch actuators and the tilt actuators 120. It also shows the shared support pin 102, 112.

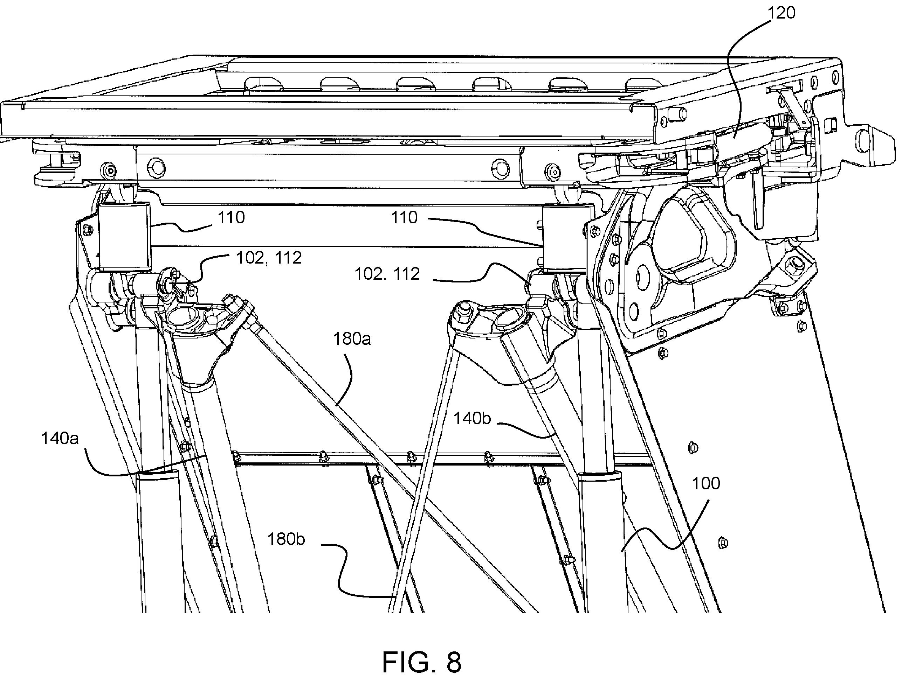

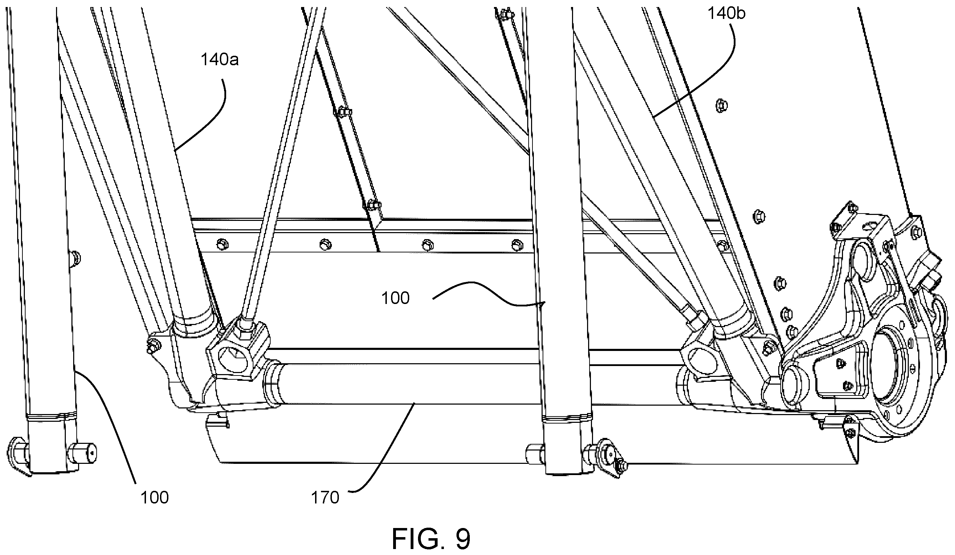

Figure 8 shows the top part of Figure 7 enlarged and Figure 9 shows the bottom part of Figure 7 enlarged.

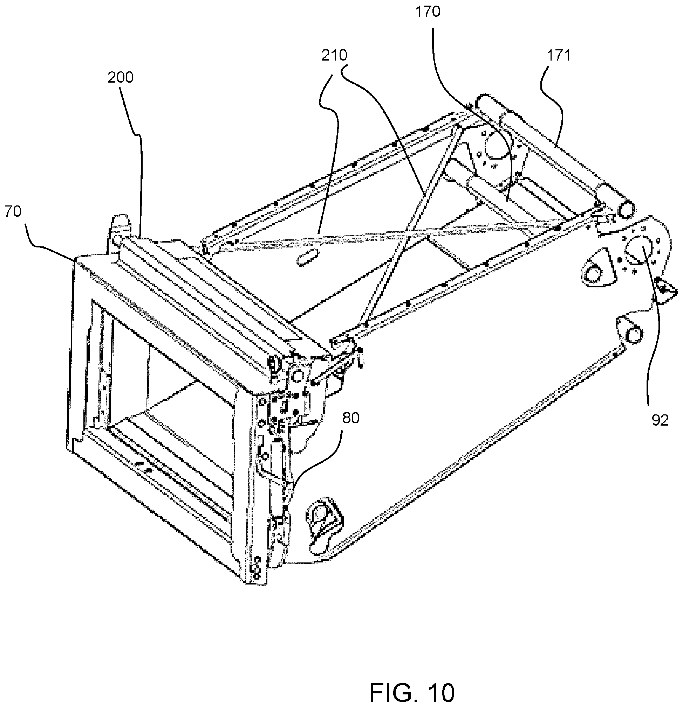

Figure 10 shows another view to show the general shape in more schematic from (with the actuators removed and the side castings to which the reinforcement bars connect). Figure 10 is used to show that the front housing section comprises a cross bar 200 which connects the two front cast side pieces (shown in Figure 8). The rear housing section also has an upper cross bar 171 in addition to the cross bar 170 described above, between the rear cast side pieces (shown in Figure 9).

The top of the feederhouse also has an X brace 210. The two arms of the X-brace are used to support the traction loads.

By way of example, the tilt frame allows adjustment of +/- 8 degrees and the pitch frame allows adjustment of +/- 6 degrees.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A feederhouse (12) for a combine harvester, comprising:
a drive belt (60);
a frame structure (62) which encloses the drive belt (60), wherein the frame structure comprises:
a tilt frame (70) for connection to a header, wherein the tilt frame is rotatably adjustable about a longitudinal axis;
a pitch frame (80) connected to tilt frame, wherein the pitch frame is rotatably adjustable about a lateral axis ;
a front housing section (94) which connects to the pitch frame; and
a rear housing section (96) which has a pivotable connection (92) for connection to a chassis of the combine harvester,
first and second lift actuators (100) and first and second lift actuator pins (102), wherein the lift actuator pins (102) each connect to the front housing section (94) at opposite lateral sides and the lift actuators (100) each connect to a lift actuator pin (102) at one end and are for connection to the combine harvester chassis at the other end;
first and second pitch actuators (110) and first and second pitch actuator pins (112), wherein the pitch actuator pins (112) each connect to the front housing section at opposite lateral sides and the pitch actuators (110) each connect to a pitch actuator pin (112) at one end and connect to the pitch frame (80) at the other end; and
first and second tilt actuators (120) each connected between the tilt frame (70) and the pitch frame (80), at opposite lateral sides,
**characterised in that**
the feederhouse further comprises first and second reinforcement bars (140a, 140b) at opposite lateral sides, wherein each reinforcement bar connects to the lift actuator pin (102) and pitch actuator pin (112) at a first end and to the rear housing section (96) at an opposite second end.

2. The feederhouse of claim 1, further comprising a first cross brace (180a) connected between the first end of the first reinforcement bar (140a) and the second end of the second reinforcement bar (140b) and a second cross brace (180b) connected between the second end of the first reinforcement bar (140a) and the first end of the second reinforcement bar (140b).

3. The feederhouse of claim 1 or 2, wherein the lift actuators, pitch actuators and tilt actuators each comprise a hydraulic cylinder.

4. The feederhouse of any one of claims 1 to 3, wherein the first and second reinforcement bars are at an underside of the feederhouse.

5. The feederhouse of any one of claims 1 to 4, wherein the front housing section and rear housing section comprise lateral metal casts and one or more cross bars (170,171, 200) connecting the lateral metal casts.

6. The feederhouse of any one of claims 1 to 5, further comprising paneling (190, 192) between the front and rear housing sections.

7. The feederhouse of claims 1 to 6, wherein one or more panels are removable from the underside of the feederhouse.

8. A combine harvester comprising:
a crop cutting head (11);
the feederhouse (12) of any one of claims 1 to 7;
a threshing system (20);
a separating system (30); and
a grain cleaning system (40) for receiving the cut and threshed crop material.

## Patentansprüche

1. Schrägförderer (12) für einen Mähdrescher, der Folgendes umfasst:
einen Antriebsriemen (60);
eine Rahmenstruktur (62), die den Antriebsriemen (60) umschließt, wobei die Rahmenstruktur Folgendes umfasst:
einen Neigungsrahmen (70) zur Verbindung mit einem Schneidwerk, wobei der Neigungsrahmen um eine Längsachse drehbar verstellbar ist;
einen Kipprahmen (80), der mit dem Neigungsrahmen verbunden ist, wobei der Kipprahmen um eine Querachse drehbar verstellbar ist;
einen vorderen Gehäuseteilabschnitt (94), der mit dem Kipprahmen verbunden ist; und
einen hinteren Gehäuseteilabschnitt (96), der eine schwenkbare Verbindung (92) zur Verbindung mit einem Fahrgestell des Mähdreschers aufweist,
ein erstes und ein zweites Hubstellglied (100) und einen ersten und einen zweiten Hubstellgliedbolzen (102), wobei die Hubstellgliedbolzen (102) jeweils an gegenüberliegenden lateralen Seiten mit dem vorderen Gehäuseteilabschnitt (94) verbunden sind und die Hubstellglieder (100) an einem Ende jeweils mit einem Hubstellgliedbolzen (102) verbunden sind und für die Verbindung mit dem Mähdrescherfahrgestell an dem anderen Ende vorgesehen sind;
ein erstes und ein zweites Kippstellglied (110) und einen ersten und einen zweiten Kippstellgliedbolzen (112), wobei die Kippstellgliedbolzen (112) jeweils an gegenüberliegenden lateralen Seiten mit dem vorderen Gehäuseteilabschnitt verbunden sind und die Hubstellglieder (110) jeweils an einem Ende mit einem Kippstellgliedbolzen (112) und an dem anderen Ende mit dem Kipprahmen (80) verbunden sind; und
ein erstes und ein zweites Neigungsstellglied (120), die jeweils an gegenüberliegenden lateralen Seiten mit dem Neigungsrahmen (70) und dem Kipprahmen (80) verbunden sind,
**dadurch gekennzeichnet, dass** der Schrägförderer ferner eine erste und eine zweite Verstärkungsstange (140a, 140b) an gegenüberliegenden lateralen Seiten umfasst, wobei jede Verstärkungsstange an einem ersten Ende mit dem Hubstellgliedbolzen (102) und dem Kippstellgliedbolzen (112) und an einem gegenüberliegenden zweiten Ende mit dem hinteren Gehäuseteilabschnitt (96) verbunden ist.

2. Schrägförderer nach Anspruch 1, der ferner eine erste Querstrebe (180a), die mit dem ersten Ende der ersten Verstärkungsstange (140a) und dem zweiten Ende der zweiten Verstärkungsstange (140b) verbunden ist, und eine zweite Querstrebe (180b), die mit dem zweiten Ende der ersten Verstärkungsstange (140a) und dem ersten Ende der zweiten Verstärkungsstange (140b) verbunden ist, umfasst.

3. Schrägförderer nach Anspruch 1 oder 2, wobei die Hubstellglieder, Kippstellglieder und Neigungsstellglieder jeweils einen Hydraulikzylinder umfassen.

4. Schrägförderer nach einem der Ansprüche 1 bis 3, wobei sich die erste und die zweite Verstärkungsstange an einer Unterseite des Schrägförderers befinden.

5. Schrägförderer nach einem der Ansprüche 1 bis 4, wobei der vordere Gehäuseteilabschnitt und der hintere Gehäuseteilabschnitt laterale Metallgussteile und eine oder mehrere Querstangen (170, 171, 200), die die lateralen Metallgussteile verbinden, umfassen.

6. Schrägförderer nach einem der Ansprüche 1 bis 5, der ferner eine Verkleidung (190, 192) zwischen dem vorderen und dem hinteren Gehäuseteilabschnitt umfasst.

7. Schrägförderer nach den Ansprüchen 1 bis 6, wobei ein oder mehrere Verkleidungselemente von der Unterseite des Schrägförderers abnehmbar sind.

8. Mähdrescher, der Folgendes umfasst:
einen Erntegutschneidvorsatz (11);
den Schrägförderer (12) nach einem der Ansprüche 1 bis 7;
ein Dreschsystem (20);
ein Trennsystem (30); und
ein Getreidereinigungssystem (40) zum Aufnehmen des geschnittenen und gedroschenen Ernteguts.

## Revendications

1. Chambre d'alimentation (12) pour moissonneuse-batteuse, comprenant :
une courroie d'entraînement (60) ;
une structure de cadre (62) qui entoure la courroie d'entraînement (60), la structure de cadre comprenant :
un cadre d'inclinaison latérale (70) destiné à être relié à une barre de coupe, ledit cadre d'inclinaison latérale étant réglable en rotation autour d'un axe longitudinal ;
un cadre d'inclinaison longitudinale (80) relié à un cadre d'inclinaison latérale, le cadre d'inclinaison longitudinale étant réglable en rotation autour d'un axe latéral ;
une section de logement avant (94) qui est reliée au cadre d'inclinaison longitudinale ; et
une section de logement arrière (96) qui comprend un raccord pivotant (92) pour la liaison à un châssis de la moissonneuse-batteuse,
des premier et second actionneurs de levage (100) et des première et seconde broches d'actionneur de levage (102), les broches d'actionneur de levage (102) étant reliées chacune à la section de logement avant (94) au niveau de côtés latéraux opposés et les actionneurs de levage (100) étant reliés chacun à une broche d'actionneur de levage (102) au niveau d'une extrémité et étant destinés à être reliés au châssis de moissonneuse-batteuse au niveau de l'autre extrémité ;
des premier et second actionneurs d'inclinaison longitudinale (110) et des première et seconde broches d'actionneur d'inclinaison longitudinale (112), les broches d'actionneur d'inclinaison longitudinale (112) étant reliées chacune à la section de logement avant au niveau de côtés latéraux opposés et les actionneurs d'inclinaison longitudinale (110) étant reliés chacun à une broche d'actionneur d'inclinaison longitudinale (112) au niveau d'une extrémité et étant reliés au cadre d'inclinaison longitudinale (80) au niveau de l'autre extrémité ; et
des premier et second actionneurs d'inclinaison latérale (120) reliés chacun entre le cadre d'inclinaison latérale (70) et le cadre d'inclinaison longitudinale (80), au niveau de côtés latéraux opposés,
**caractérisée en ce que** la chambre d'alimentation comprend en outre des première et seconde barres de renforcement (140a, 140b) au niveau de côtés latéraux opposés, chaque barre de renforcement étant reliée à la broche d'actionneur de levage (102) et à la broche d'actionneur d'inclinaison longitudinale (112) au niveau d'une première extrémité et à la section de logement arrière (96) au niveau d'une seconde extrémité opposée.

2. Chambre d'alimentation selon la revendication 1, comprenant en outre une première entretoise transversale (180a) reliée entre la première extrémité de la première barre de renforcement (140a) et la seconde extrémité de la seconde barre de renforcement (140b) et une seconde entretoise transversale (180b) reliée entre la seconde extrémité de la première barre de renforcement (140a) et la première extrémité de la seconde barre de renforcement (140b).

3. Chambre d'alimentation selon la revendication 1 ou 2, les actionneurs de levage, les actionneurs d'inclinaison longitudinale et les actionneurs d'inclinaison latérale comprenant chacun un vérin hydraulique.

4. Chambre d'alimentation selon l'une quelconque des revendications 1 à 3, les première et seconde barres de renforcement étant situées au niveau d'une face inférieure de la chambre d'alimentation.

5. Chambre d'alimentation selon l'une quelconque des revendications 1 à 4, la section de logement avant et la section de logement arrière comprenant des moulages métalliques latéraux et une ou plusieurs barres transversales (170, 171, 200) reliant les moulages métalliques latéraux.

6. Chambre d'alimentation selon l'une quelconque des revendications 1 à 5, comprenant en outre des panneaux (190, 192) entre les sections de logement avant et arrière.

7. Chambre d'alimentation selon les revendications 1 à 6, un ou plusieurs panneaux pouvant être retirés de la face inférieure de la chambre d'alimentation.

8. Moissonneuse-batteuse comprenant :
une tête de coupe de récolte (11) ;
la chambre d'alimentation (12) selon l'une quelconque des revendications 1 à 7 ;
un système de battage (20) ;
un système de séparation (30) ; et
un système de nettoyage de grain (40) destiné à recevoir le matériau de récolte coupé et battu.
